# FASCICULE DE BREVET EUROPEEN

(11) **EP 2 933 018 B1**
(45) Date de publication et mention de la délivrance du brevet: **19.09.2018**
(21) Numéro de dépôt: 15163315.3
(22) Date de dépôt: 13.04.2015
(51) Int. Cl.: B01J 23/745, B01J 23/889, B01J 23/83, B01J 21/06, B01D 53/86, B01D 53/56, B01J 23/00, B01J 35/02, B01J 35/10, B01D 53/94

(54) **CATALYSEUR DE DÉNITRIFICATION, PROCÉDÉ DE DÉNITRIFICATION DE FUMÉES UTILISANT UN TEL CATALYSEUR ET PROCÉDÉ DE FABRICATION D'UN TEL CATALYSEUR**
DENITRIFIKATIONSKATALYSATOR, DENITRIFIKATIONSVERFAHREN VON RAUCHGASEN, BEI DEM EIN SOLCHER KATALYSATOR ANGEWANDT WIRD, UND HERSTELLUNGSVERFAHREN EINES SOLCHEN KATALYSATORS
DENITRIFICATION CATALYST, SMOKE DENITRIFICATION METHOD USING SUCH A CATALYST AND METHOD FOR MANUFACTURING SUCH A CATALYST

(30) Priorité: 14.04.2014 FR 1453297
(43) Date de publication de la demande: 21.10.2015
(73) Titulaire: LAB SA, 69007 Lyon (FR)
(72) Inventeur: Siret, Bernard, 69200 Venissieux (FR); Tabaries, Frank, 83430 Saint Mandrier sur Mer (FR)
(74) Mandataire: Lavoix

(56) Documents cités:
- EP-A1- 2 745 932
- CN-A- 101 879 452
- US-A1- 2008 095 682
- US-A1- 2009 304 566
- US-A1- 2010 209 323
- YU J ET AL: "Sulfur poisoning resistant mesoporous Mn-base catalyst for low-temperature SCR of NO with NH3", APPLIED CATALYSIS B: ENVIRONMENTAL, ELSEVIER, AMSTERDAM, NL, vol. 95, no. 1-2, 12 mars 2010 (2010-03-12), pages 160-168, XP026915480, ISSN: 0926-3373, DOI: 10.1016/J.APCATB.2009.12.023 [extrait le 2010-02-19]

## Description

La présente invention concerne un catalyseur de dénitrification, ainsi qu'un procédé de dénitrification catalytique de fumées dans lequel un tel catalyseur est utilisé. Elle concerne également un procédé de fabrication d'un tel catalyseur. L'invention s'intéresse plus spécifiquement aux catalyseurs de dénitrification, actifs à base température et contenant un mélange d'oxydes métalliques.

Les catalyseurs de dénitrification sont largement utilisés pour réduire les émissions d'oxydes d'azote, couramment appelés NOx, dans un large domaine d'industries, parmi lesquelles l'industrie de l'incinération et celle de la production d'énergie. Les catalyseurs utilisés emploient un agent de réduction, le plus souvent de l'ammoniac : cette catalyse est connue sous le nom de réduction catalytique sélective, appelée couramment « procédé SCR » (acronyme de l'expression anglaise correspondante « Selective Catalytic Réduction »). Ces catalyseurs comprennent typiquement un support, tel que l'alumine, l'oxyde de titane, l'oxyde de zirconium ou une zéolite, sur lequel au moins un métal du groupe V_{B} ou VI_{B} est déposé. La formulation de loin la plus communément utilisée est un catalyseur structuré, ayant un support constitué d'oxyde de titane sous sa forme anatase, sur lequel sont déposés des principes actifs, tout particulièrement des oxydes de vanadium, tels que V₂O₅, et de tungstène, tels que WO₃. Pour réduire les oxydes d'azote, on associe à de tels catalyseurs l'introduction d'ammoniac de façon à ce que les réactions entre l'ammoniac et les oxydes d'azote forment de l'azote, détoxifiant ainsi les fumées traitées. D'autres composés pouvant libérer de l'ammoniac au niveau ou en amont du catalyseur peuvent aussi être utilisés, par exemple de l'urée.

Afin de conduire la catalyse de façon satisfaisante et à une température limitée à moins de 300°C, la formulation du catalyseur joue un rôle essentiel. Cependant, à des températures inférieures à 220°C, l'activité des catalyseurs commerciaux à base de vanadium chute et n'est plus économiquement satisfaisante dans le sens où le volume de catalyseur à employer devient trop important au regard du flux des fumées à traiter.

Des formulations alternatives utilisant d'autres métaux, comme le cuivre ou le manganèse, ont été proposées et sont plus actives que les formulations à base de vanadium et de tungstène à ces températures. Toutefois, quand on veut pouvoir opérer à des températures plus basses que 180°C, ces formulations alternatives montrent à nouveau leurs limites. En particulier, l'activité apparente des catalyseurs en présence de vapeur d'eau chute fortement quand la température descend en deçà de 180°C. Cette perte d'activité est probablement due à un phénomène d'adsorption compétitive entre la vapeur d'eau et l'ammoniac sur les sites du catalyseur.

Or, il est d'intérêt industriel particulier de pouvoir opérer à des températures aussi faibles que possibles, en particulier en deçà de 200°C, voire en deçà de 180°C. En effet, en opérant à basse température, on limite la taille des réchauffeurs et équipements de récupération de l'énergie thermique et, pour certaines applications, il est même possible de complètement omettre ceux-ci, par exemple quand le réacteur de dénitrification est situé est aval d'un filtre à manche.

Par ailleurs, de récents travaux ont montré que la présence de cérium aurait un effet bénéfique sur des catalyseurs de dénitrification à base d'oxydes de fer ou d'oxydes de manganèse. Cependant, ces travaux ne s'accordent pas sur un dosage optimal des oxydes métalliques des catalyseurs considérés, étant remarqué que tous ces travaux tendent à prévoir une teneur en cérium relativement élevée en vue d'augmenter les performances des catalyseurs au détriment du coût. US-A-2008/095682 et CN-A-101 879 452 illustrent ces considérations.

Le but de la présente invention est de proposer une formulation catalytique pour la dénitrification de fumées, qui offre de bonnes performances dans une plage de températures de 130 à 180°C et en présence de vapeur d'eau.

A cet effet, l'invention a pour objet un catalyseur de dénitrification, tel que défini à la revendication 1.

Les travaux des inventeurs ont montré que, de manière surprenante et inattendue, une zone, restreinte et optimale, dans l'espace des compositions catalytiques à base d'oxydes de fer, de manganèse et de cérium conduit à des performances particulièrement avantageuses pour dénitrifier des fumées : le catalyseur conforme à l'invention présente une activité particulièrement élevée pour la conversion des oxydes d'azote par catalyse. Les essais des inventeurs pour quantifier cette activité catalytique ont été menés en présence de vapeur d'eau : il est en effet critique d'effectuer de tels essais en présence de vapeur d'eau car il est connu que l'humidité déprime fortement l'activité des catalyseurs de dénitrification, et ce d'autant plus qu'on opère à basse température, que l'on peut définir ici comme une température inférieure à 180°C au niveau du réacteur de dénitrification. Ainsi, le catalyseur conforme à l'invention est particulièrement efficace pour dénitrifier les fumées issues de procédé de combustion, comme l'incinération, ou les rejets gazeux de combustion, issus de central thermique ou des moteurs diesel.

En pratique, le catalyseur conforme à l'invention peut être préparé par divers procédés connus en soi, typiquement par déposition-précipitation.

Quel que soit son procédé de fabrication, le catalyseur conforme à l'invention associe, en tant qu'entités catalytiques actives, des oxydes de fer, de manganèse et de cérium. La structure de ces oxydes n'est pas limitative de l'invention, dans le sens où ces oxydes peuvent aussi bien se présenter sous forme d'oxydes mixtes que sous forme d'un mélange d'espèces distinctes coexistentes, voire d'un « mix » entre ces deux formes. D'ailleurs, en ce domaine, l'homme de l'art n'ignore pas que la nuance entre oxydes mixtes et coexistence d'espèces est mince, de sorte que l'invention ne saurait être exclusive à une structure physique formelle.

Par ailleurs, on comprend que, selon sa définition la plus générale, posée à la revendication 1, le catalyseur conforme à l'invention peut inclure d'autres oxydes que les oxydes de fer, de manganèse et de cérium, ces autres oxydes pouvant être optionnellement présents en tant que dopants, co-catalyseurs, liants, supports, etc. Ceci étant, considérés ensemble, les oxydes de fer, de manganèse et de cérium constituent, en masse, au moins 50%, préférentiellement 60%, voire 70%, voire 80%, voire 90%, voire 100% des entités catalytiques actives du catalyseur conforme à l'invention.

Des caractéristiques additionnelles avantageuses du catalyseur de dénitrification conforme à l'invention sont spécifiées aux revendications 2 à 8.

L'invention a également pour objet un procédé de dénitrification catalytique de fumées, tel que défini à la revendication 9.

L'invention a aussi pour objet un procédé de fabrication d'un catalyseur de dénitrification, tel que défini à la revendication 10. Ce procédé permet de fabriquer le catalyseur tel que défini à la revendication 4 ou à la revendication 5 ou à l'une des revendications 7 et 8 prise en combinaison avec la revendication 4.

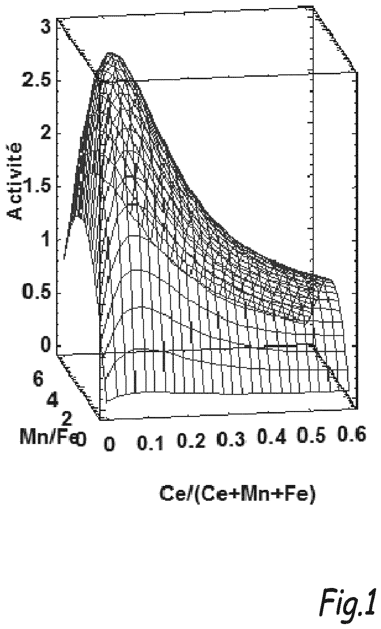

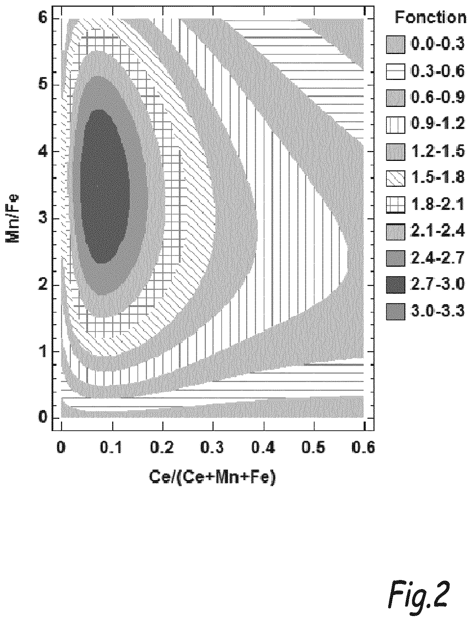

L'invention sera mieux comprise à la lecture de la description qui va suivre, donnée uniquement à titre d'exemple et faite en se référant aux dessins sur lesquels les figures 1 et 2 sont des graphes relatifs à l'activité de catalyseurs dont certains sont conformes à l'invention tandis que les autres ne relèvent pas de l'invention.

Ci-après, on va décrire successivement une liste des composés chimiques à partir desquels le catalyseur selon l'invention est préparé, la préparation de ce catalyseur, et des éléments de caractérisation de ce catalyseur.

### Liste des composés chimiques à partir desquels le catalyseur selon l'invention est préparé :

Le premier composé chimique est un sel de fer, qui, après calcination à une température de 450°C pendant quatre heures sous air, ne laisse ni des résidus contenant du chlore, ni des résidus contenant du soufre. Les sulfates et les chlorures sont donc à exclure. A titre d'exemple non limitatif, les acétates et les nitrates conviennent, tout particulièrement le nitrate de fer (III) nonahydraté (Fe(NO₃)₃,9H₂O).

Le deuxième composé chimique est un sel de manganèse, qui, après calcination à une température de 450°C pendant quatre heures sous air, ne laisse ni de résidus contenant du chlore, ni de résidus contenant du soufre. Les sulfates et les chlorures sont donc à exclure. A titre d'exemple non limitatif, les acétates et les nitrates conviennent, tout particulièrement le nitrate de manganèse (II) ou l'acétate de manganèse (II) tetrahydraté (Mn(CH₃COO)₂,4H₂O). Le sel de manganèse peut aussi être préparé par action d'acide nitrique ou acétique sur le carbonate de manganèse, beaucoup moins onéreux : dans ce cas, il peut être nécessaire d'ajouter un agent réducteur, par exemple de l'eau oxygénée H₂O₂, qui dissout la couche d'oxyde de manganèse MnO₂ qui peut se former et ralentir la dissolution du carbonate de manganèse.

Le troisième composé chimique est un sel de cérium, qui, après calcination à une température de 450°C pendant quatre heures sous air, ne laisse ni de résidus contenant du chlore, ni de résidus contenant du soufre. A titre d'exemple non limitatif, le nitrate de cérium (III) ou l'ammono-nitrate de cérium (IV) peuvent être employés.

Le quatrième composé chimique est un agent précipitant, tel que, de manière préférée, le carbamate d'ammonium. D'autres agents précipitants peuvent être utilisés, comme le carbonate d'ammonium ou l'ammoniac, ou bien comme l'urée ou l'hexaméthylène tetramine qui, par hydrolyse quand on les chauffe, libèrent de l'ammoniac. En pratique, les meilleurs résultats sont obtenus avec le carbamate d'ammonium.

Le cinquième composé chimique est un oxyde de titane (TiO₂) sous forme anatase et ayant une surface spécifique comprise entre 70 m²/g et 400 m²/g, étant remarqué que cette plage de valeurs pour la surface spécifique traduit un état finement divisé pour l'oxyde de titane. A titre d'exemple non limitatif, la qualité connue commercialement sous les noms de « DT51 de Millenium » et de « DT51 » convient. Il est à noter que les inventeurs ont mis en évidence l'intérêt d'utiliser une telle qualité d'oxyde de titane, en préparant de manière identique deux séries de catalyseurs, l'une avec un oxyde de titane ayant une qualité « ordinaire », c'est-à-dire ayant une surface spécifique égale à 10 m²/g, et l'autre avec un oxyde de titane ayant une grande surface spécifique, à savoir ayant une surface spécifique de 81 m²/g : les résultats obtenus sont regroupés dans le tableau ci-dessous, étant remarqué que les valeurs adimensionnelles de l'activité des catalyseurs ont été évaluées de la manière décrite au début de la partie à venir, intitulée « Caractérisation du catalyseur conforme à l'invention ».

| | | Activité catalytique | |
|---|---|---|---|
| Rapport molaire Mn/Fe | Rapport molaire Ce/(Mn+Fe+Ce) | Support de TiO₂ ayant une surface spécifique égale à 81 m²/g | Support de TiO₂ ayant une surface spécifique égale à 10 m²/g |
| 4,5 | 0,225 | 1,85 | 1,15 |
| 3,5 | 0,05 | 2,96 | 0,8 |
| 3,2 | 0,15 | 2,94 | 1,15 |

Par ailleurs, il est à noter que, selon l'invention, la présence d'oxyde de titane est optionnelle, dans le sens où certaines formulations du catalyseur, très actives, ont aussi été obtenues sans employer d'oxyde de titane comme support du catalyseur.

### Préparation du catalyseur conforme à l'invention :

A partir des composés chimiques listés ci-dessus, un catalyseur s'obtient, de manière classique, par déposition-précipitation, mise en oeuvre par les étapes décrites ci-dessous.

On forme une suspension homogène en dissolvant, dans de l'eau, les sels de fer, de manganèse et de cérium et, le cas échéant, en y ajoutant le dioxyde de titane lorsque ce dernier est présent. On ajoute ensuite l'agent précipitant, de manière à précipiter lentement les hydroxydes métalliques, à savoir les hydroxydes de fer, de manganèse et de cérium. Dans le cas préféré de l'emploi, comme agent précipitant, du carbamate d'ammonium, ou bien dans le cas de l'emploi de carbonate d'ammonium ou d'ammoniac, cette précipitation peut avoir lieu à froid. Il est important d'ajouter l'agent précipitant lentement, et de préférence sur un laps de temps compris entre dix et quarante minutes, de façon à obtenir une précipitation fine et contrôlée. Une agitation est requise.

Pour le cas où l'agent précipitant utilisé est de l'urée ou de l'hexaméthylène tetramine, il faut opérer à chaud, à une température comprise entre 60°C et 110°C, pour qu'une réaction d'hydrolyse puisse se produire et libérer graduellement de l'ammoniac.

Le produit précipité est ensuite séparé, de manière connue en soi, de la phase aqueuse. On emploie par exemple, seule ou en combinaison, la filtration, la centrifugation ou la décantation.

De manière optionnelle, on procède à un rinçage, qui a pour but d'enlever les éléments solubles indésirables comme des sulfates, des chlorures, du sodium ou du potassium, qui sont néfastes à l'activité catalytique, si les réactifs de départ en contenaient, par exemple comme impuretés.

On procède alors à un séchage, d'une durée comprise entre une heure et quatre heures de préférence, et à une température ne dépassant pas 120°C pendant les deux premières heures. La durée de la phase de séchage peut dépasser quatre heures, sans effet néfaste pour l'activité. A l'issue de la phase de séchage, le produit obtenu doit être manipulable comme un solide, mais il n'est pas obligatoirement parfaitement sec.

Ce produit obtenu est ensuite calciné sous air, à une température comprise 400°C et 550°C, de préférence entre 450°C et 500°C, pendant une durée d'au moins deux heures, de préférence comprise entre quatre et cinq heures. Le rôle de cette phase de calcination est de transformer les hydroxydes vers les oxydes métalliques actifs, à savoir, entre autres, MnO₂, Mn₂O₃, Fe₂O₃ et CeO₂.

A l'issue de l'opération de calcination, on obtient une poudre calcinée, qui peut être utilisée en tant que telle pour former le catalyseur : dans ce cas, ce catalyseur est employé sous forme pulvérulente, par exemple dans un réacteur gaz-solides d'une technologie en soi. Ceci étant, dans sa forme d'utilisation préférée, le catalyseur est mis à disposition sous une forme structurée, telle que des monolithes : pour ce faire, de manière connue en soi, la poudre calcinée précitée est mélangée à un liant d'extrusion, notamment de la bentonite, de la sépiolite ou de la terre d'infusoire, la pâte ainsi préparée étant extrudée à travers une filière puis, le cas échéant, séchée et/ou calcinée.

### Caractérisation du catalyseur conforme à l'invention :

Afin d'évaluer l'activité de formulations catalytiques selon l'invention, ainsi que l'activité de formulations, préparées de manière identique mais non conformes à l'invention, les inventeurs ont mis en oeuvre les essais suivants.

0,5 g de catalyseurs, tous préparés comme décrit ci-dessus mais ayant des teneurs en oxydes métalliques différentes les unes des autres, sont tamisés de façon à ne retenir que la fraction de taille entre 0,6 et 1 mm. Chacun de ces échantillons est dilué dans 10 g d'un ballast inactif et la masse obtenue est placée dans un réacteur d'un diamètre de 20 mm, maintenu à la température des essais. Les résultats, donnés par la suite, concernent des essais réalisés à 215°C, étant remarqué que d'autres séries d'essais, aboutissant à des résultats similaires, ont été réalisées à d'autres températures, y compris à des températures comprises entre 130 et 180°C.

Un mélange gazeux, contenant de la vapeur d'eau et maintenu à la température des essais, est introduit dans le réacteur : ce mélange est constitué de 0,6 l/min de monoxyde d'azote (NO) à 2000 ppmv et de 0,8 l/min d'ammoniac à 2000 ppmv, ce mélange étant chauffé et de l'eau y est vaporisée de façon à obtenir 17,5% d'eau, en pourcentage volumique sur base humide. Les débits précités de 0,6 et 0,8 l/min sont mesurés à température ambiante et à pression atmosphérique.

Au niveau du réacteur, on mesure la conversion du monoxyde d'azote par un analyseur. A partir de cette mesure de la conversion, on calcule l'activité adimensionnelle k du catalyseur testé, par la relation k = -Ln(1-η) où η désigne la conversion.

Les valeurs d'activité, calculées pour les divers échantillons testés, sont regroupées sur les figures 1 et 2 : ces figures 1 et 2 visualisent, de manière différente, l'activité en fonction de deux paramètres essentiels caractérisant l'invention, à savoir, d'une part, le rapport molaire manganèse/fer (Mn/Fe) et, d'autre part, la fraction molaire en cérium, ramenée aux trois métaux actifs que sont le manganèse, le fer et le cérium (Ce/(Mn+Fe+Ce)). Plus précisément, la figure 1 est une représentation graphique de l'activité, par un diagramme « en fils de fer », en fonction, d'une part, du rapport molaire Mn/Fe et, d'autre part, de la fraction molaire Ce/(Mn+Fe+Ce). La figure 2 donne la même information, sous forme d'un diagramme en surfaces de réponse, dont les plages de valeurs de l'activité sont indiquées sur la droite de la figure 2.

Comme illustré par les figures 1 et 2, les compositions catalytiques, particulièrement actives pour la dénitrification catalytique, sont obtenues en sélectionnant un rapport molaire Mn/Fe compris entre 2 et 5, et une fraction molaire Ce/(Mn+Fe+Ce) comprise entre 0,03 et 0,17.

De manière préférée, le rapport molaire Mn/Fe est sélectionné entre 2,1 et 4,9, voire entre 2,2 et 4,8, voire entre 2,3 et 4,7, voire entre 2,4 et 4,6, voire même entre 2,5 et 4,5, quelle que soit la valeur, comprise entre 0,03 et 0,17, de la fraction molaire Ce/(Mn+Fe+Ce).

De manière préférée, la fraction molaire Ce/(Mn+Fe+Ce) est sélectionnée entre 0,035 et 0,16, voire entre 0,04 et 0,15, voire entre 0,045 et 0,14, voire même entre 0,05 et 0,13, quelle que soit la valeur, comprise entre 2 et 5, du rapport molaire Mn/Fe.

Une formulation catalytique particulièrement préférée est obtenue en sélectionnant, à la fois, un rapport molaire Mn/Fe compris entre 2,5 et 4,5 et une fraction molaire Ce/(Mn+Fe+Ce) comprise entre 0,05 et 0,13.

Dans le cas où le catalyseur est préparé de sorte qu'il comprend de l'oxyde de titane, qui est tel que défini plus haut et sur lequel se déposent les oxydes de fer, de manganèse et de cérium, l'oxyde de titane, alors support de ce catalyseur, représente préférentiellement entre 25 et 75 % de la masse totale du catalyseur.

Par ailleurs, dans le cas où le catalyseur est préparé avec un liant d'extrusion, comme expliqué plus haut, ce liant d'extrusion représente préférentiellement entre 5 et 30 % de la masse totale du catalyseur.

Dans tous les cas, le mode de préparation spécifique, à savoir la déposition précipitation réalisée lentement, c'est-à-dire en lien avec le laps de temps de dix à quarante minutes évoqué plus haut, suivie d'un séchage et d'une calcination dans des conditions contrôlées, influe directement et de manière forte sur l'état final physique du catalyseur, et en particulier sur sa surface spécifique BET et son volume poreux, ainsi que sur la répartition en taille des pores, telle que déterminée par une porosimétrie mercure. Ces paramètres sont connus pour influer directement sur l'activité des catalyseurs. Les surfaces spécifiques obtenues dépassent 100 m²/g (surface BET) pour les catalyseurs préparés selon l'invention quand ils sont sous forme pulvérulente et sans liant, et dépassent 50m²/g quand ils sont sous forme extrudée et contiennent environ 20% de bentonite, l'addition d'un liant et le processus d'extrusion faisant perdre de la surface BET.

## Revendications

1. Catalyseur de dénitrification,
comportant des oxydes de fer, de manganèse et de cérium,
**caractérisé en ce que** les oxydes de fer, de manganèse et de cérium, considérés ensemble, constituent au moins 50% en masse des entités catalytiques actives du catalyseur, et **en ce que** le rapport molaire manganèse/fer (Mn/Fe) est compris entre 2,5 et 5 et le rapport molaire cérium/(manganèse+fer+cérium) (Ce/(Mn+Fe+Ce)) est compris entre 0,03 et 0,17.

2. Catalyseur suivant la revendication 1, **caractérisé en ce que** le rapport molaire manganèse/fer (Mn/Fe) est compris entre 2,5 et 4,5.

3. Catalyseur suivant l'une des revendications 1 ou 2, **caractérisé en ce que** le rapport molaire cérium/(manganèse+fer+cérium) (Ce/(Mn+Fe+Ce)) est compris entre 0,05 et 0,13.

4. Catalyseur suivant l'une quelconque des revendications précédentes, **caractérisé en ce qu'**il comporte en outre un support de dépôt des oxydes de fer, de manganèse et de cérium, qui est constitué d'oxyde de titane, sous forme anatase.

5. Catalyseur suivant la revendication 4, **caractérisé en ce que** l'oxyde de titane du support représente entre 25 et 75 % de la masse totale du catalyseur.

6. Catalyseur suivant l'une quelconque des revendications 1 à 3, **caractérisé en ce qu'**il est dépourvu d'un support à base d'oxyde de titane.

7. Catalyseur suivant l'une quelconque des revendications précédentes, **caractérisé en ce qu'**il comporte en outre un liant d'extrusion, qui représente entre 5 et 30 % de la masse totale du catalyseur.

8. Catalyseur suivant la revendication 7, **caractérisé en ce que** le liant d'extrusion contient de la bentonite, de la sépiolite ou de la terre d'infusoire.

9. Procédé de dénitrification catalytique de fumées, dans lequel un catalyseur, conforme à l'une quelconque des revendications précédentes, est utilisé pour dénitrifier des fumées présentant une température comprise entre 130°C et 180°C et une humidité comprise entre 9 et 25% molaire.

10. Procédé de fabrication d'un catalyseur de dénitrification, dans lequel :
- on prépare une suspension en mélangeant, dans de l'eau, à la fois :
- du dioxyde de titane, sous forme anatase et ayant une surface spécifique comprise entre 70 m²/g et 400 m²/g, et
- des sels de fer, de manganèse et de cérium dans des proportions telles que, d'une part, le rapport molaire manganèse/fer (Mn/Fe) est compris entre 2,5 et 5 et le rapport molaire cérium/(manganèse+fer+cérium) (Ce/(Mn+Fe+Ce)) est compris entre 0,03 et 0,17, et, d'autre part, considérés ensemble, les oxydes de fer, de manganèse et de cérium, obtenus à l'issue du procédé de fabrication, constituent au moins 50% en masse des entités catalytiques actives du catalyseur fabriqué,
- on ajoute à la suspension un agent précipitant et on agite, et
- on récupère le produit précipité par séparation, puis on le sèche et on le calcine.

## Patentansprüche

1. Denitrifikationskatalysator,
umfassend Eisen-, Mangan- und Ceroxide,
**dadurch gekennzeichnet, dass** die Eisen-, Mangan- und Ceroxide zusammen betrachtet mindestens 50 % der Masse der aktiven katalytischen Einheiten des Katalysators bilden und dass das Molverhältnis von Mangan/Eisen (Mn/Fe) zwischen 2,5 und 5 beträgt und das Molverhältnis von Cer/(Mangan+Eisen+Cer) (Ce/(Mn+Fe+Ce)) zwischen 0,03 und 0,17 beträgt.

2. Katalysator nach Anspruch 1, **dadurch gekennzeichnet, dass** das Molverhältnis von Mangan/Eisen (Mn/Fe) zwischen 2,5 und 4,5 beträgt.

3. Katalysator nach einem der Ansprüche 1 oder 2, **dadurch gekennzeichnet, dass** das Molverhältnis von Cer/(Mangan+Eisen+Cer) (Ce/(Mn+Fe+Ce)) zwischen 0,05 und 0,13 beträgt.

4. Katalysator nach einem der vorhergehenden Ansprüche,
**dadurch gekennzeichnet, dass** er ferner eine Stütze für die Abscheidung der Eisen-, Mangan- und Ceroxide umfasst, die aus Titanoxid in Anatasform besteht.

5. Katalysator nach Anspruch 4, **dadurch gekennzeichnet, dass** das Titanoxid der Stütze 25 bis 75 % der Gesamtmasse des Katalysators darstellt.

6. Katalysator nach einem der Ansprüche 1 bis 3, **dadurch gekennzeichnet, dass** er frei von einer Stütze auf Basis von Titanoxid ist.

7. Katalysator nach einem der vorhergehenden Ansprüche,
**dadurch gekennzeichnet, dass** er ferner ein Extrusionsbindemittel umfasst, das 5 bis 30 % der Gesamtmasse des Katalysators darstellt.

8. Katalysator nach Anspruch 7, **dadurch gekennzeichnet, dass** das Extrusionsbindemittel Bentonit, Sepiolith oder Kieselgur enthält.

9. Katalytisches Denitrifikationsverfahren von Rauchgasen, wobei ein Katalysator gemäß einem der vorhergehenden Ansprüche verwendet wird, um Rauchgase zu denitrieren, die eine Temperatur zwischen 130 °C und 180 °C und eine Feuchtigkeit zwischen 9 und 25 Mol-% aufweisen.

10. Verfahren zur Herstellung eines Denitrifikationskatalysators, wobei:
- eine Suspension hergestellt wird, indem Folgendes in Wasser gleichzeitig vermischt wird:
- Titandioxid in Anatasform und eine spezifische Oberfläche zwischen 70 m²/g und 400 m²/g aufweisend, und
- Eisen-, Mangan- und Cersalze in Anteilen, sodass zum einen das Molverhältnis von Mangan/Eisen (Mn/Fe) zwischen 2,5 und 5 beträgt und das Molverhältnis von Cer/(Mangan+Eisen+Cer) (Ce/(Mn+Fe+Ce)) zwischen 0,03 und 0,17 beträgt und zum anderen die Eisen-, Mangan- und Ceroxide zusammen betrachtet, erhalten als Ergebnis des Herstellungsverfahrens, mindestens 50 % der Masse der aktiven katalytischen Einheiten des hergestellten Katalysators bilden,
- der Suspension ein Fällmittel hinzugefügt und geschüttelt wird, und
- das gefällte Produkt durch Trennung gewonnen und dann getrocknet und kalziniert wird.

## Claims

1. Denitrification catalyst,
comprising iron, manganese and cerium oxides, **characterized in that** the iron, manganese and cerium oxides, taken together, constitute at least 50% by weight of the active catalytic entities of the catalyst and **in that** the manganese/iron (Mn/Fe) molar ratio is between 2.5 and 5 and the cerium/(manganese+iron+cerium) (Ce/(Mn+Fe+Ce)) molar ratio is between 0.03 and 0.17.

2. Catalyst according to Claim 1, **characterized in that** the manganese/iron (Mn/Fe) molar ratio is between 2.5 and 4.5.

3. Catalyst according to either of Claims 1 and 2, **characterized in that** the cerium/(manganese+iron+cerium) (Ce/(Mn+Fe+Ce)) molar ratio is between 0.05 and 0.13.

4. Catalyst according to any one of the preceding claims, **characterized in that** it additionally comprises a support for deposition of the iron, manganese and cerium oxides which consists of titanium oxide in the anatase form.

5. Catalyst according to Claim 4, **characterized in that** the titanium oxide of the support represents between 25% and 75% of the total weight of the catalyst.

6. Catalyst according to any one of Claims 1 to 3, **characterized in that** it is devoid of a support based on titanium oxide.

7. Catalyst according to any one of the preceding claims, **characterized in that** it additionally comprises an extrusion binder which represents between 5% and 30% of the total weight of the catalyst.

8. Catalyst according to Claim 7, **characterized in that** the extrusion binder contains bentonite, sepiolite or diatomaceous earth.

9. Process for the catalytic denitrification of flue gases, in which a catalyst in accordance with any one of the preceding claims is used to denitrify flue gases exhibiting a temperature of between 130°C and 180°C and a humidity of between 9 and 25 mol%.

10. Process for the manufacture of a denitrification catalyst, in which:
- a suspension is prepared by simultaneously mixing, in water:
- titanium dioxide, in anatase form and having a specific surface of between 70m²/g and 400 m²/g, and
- iron, manganese and cerium salts in proportions such that, on the one hand, the manganese/iron (Mn/Fe) molar ratio is between 2.5 and 5 and the cerium/(manganese+iron+cerium) (Ce/(Mn+Fe+Ce)) molar ratio is between 0.03 and 0.17 and, on the other hand, taken together, the iron, manganese and cerium oxides, obtained on conclusion of the manufacturing process, constitute at least 50% by weight of the active catalytic entities of the catalyst manufactured,
- a precipitating agent is added to the suspension and stirring is carried out, and
- the precipitated product is recovered by separation and is then dried and calcined.
